# EUROPEAN PATENT SPECIFICATION

(11) **EP 0 592 556 B1**
(45) Date of publication and mention of the grant of the patent: **13.11.1996**
(21) Application number: 92914851.8
(22) Date of filing: 03.07.1992
(51) Int. Cl.: B62D 27/06, B62D 33/06

(54) **A DEVICE FOR ANCHORING A POLE ON A TRUCK AND A POLE FOR A TRUCK**
EINRICHTUNG ZUM BEFESTIGEN EINER STECKRUNGE AUF NUTZFAHRZEUGE UND STECKRUNGE FÜR NUTZFAHRZEUG
DISPOSITIF PERMETTANT D'ANCRER UN POTEAU SUR UN CAMION, ET POTEAU DESTINE A UN CAMION

(30) Priority: 05.07.1991 SE 9102110
(43) Date of publication of application: 20.04.1994
(73) Proprietor: OLSSON, Rolf, 820 41 Farila (SE); JONSSON, Kjell, S-827 00 Ljusdal (SE)
(72) Inventor: JONSSON, Kjell, S-827 00 Ljusdal (SE)
(74) Representative: Karlsson, Leif Karl Gunnar
(86) International application number: SE9200503
(87) International publication number: WO9301078

(56) References cited:
- DE-A- 1 455 895
- FR-A- 2 251 465
- NO-C- 82 972
- SE-B- 451 987
- SE-C- 442 848

## Description

### Technical Field

The present invention relates to a device for anchoring a post to a load-carrying vehicle, such as a truck, for instance, and also to a post for such a vehicle, according to the preambles of independent claims 1 and 7.

### Description of the Known Prior Art

A large number of devices by means of which posts can be anchored to load-carrying vehicles, such as trucks, are known to the art. Many different types of posts are also known. Examples of such post-anchoring devices and post constructions are disclosed in SE-B-451,987, DE-A- 1,455,895 and US-A-1,001,690. These known post-anchoring devices are of a complicated design and include a large number of components and/or do not provide a safe and "rattle-free" anchorage that can be established and dismantled rapidly. The known posts are often too heavy or too bulky in relation to their mechanical strengths or have configurations which prevent the post-anchoring devices from being given a simple, safe and rattle-free construction. FR-A-2 251 465, which represents the most relevant prior art, discloses a post for load-carrying vehicles which have longitudinal extending recesses, which, however, do not extend into the region of the engagement with the locking arrangement.

### Summary of the Invention

An object of the present invention is to provide an improved post-anchoring device and post with which the aforesaid drawbacks of known devices and known posts are at least partially eliminated.

This object is fulfilled by means of the present invention as characterized by the features set forth in the characterizing clauses of respective Claims.

### Brief Description of the Drawings

Figure 1 is a schematic, perspective view of an inventive device for anchoring a post to a load-carrying vehicle and also shows part of an inventive post anchored by means of said device;
Figure 2 is a front view of the device shown in Figure 1;
Figure 3 is a side view of the device shown in Figure 1;
Figures 4 and 5 illustrate the device and the post shown in Figure 1 from above;
Figure 6 is a perspective view which illustrates the post shown partially in Figure 1; and
Figure 7 is a perspective view which illustrates a reinforcement included in the post shown in Figures 1 and 6.

### Best Modes of Carrying Out the Invention

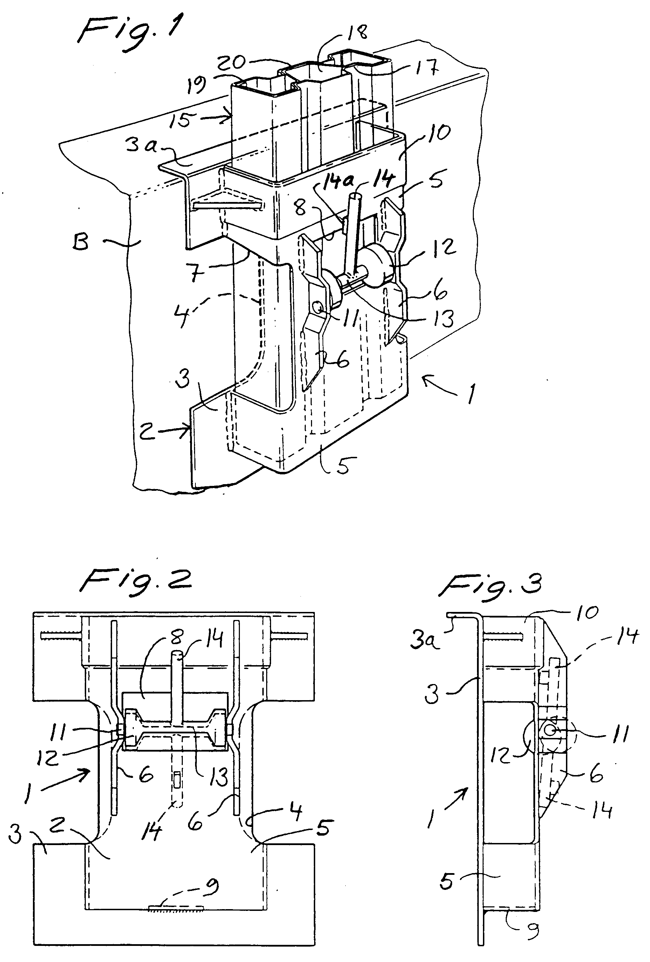

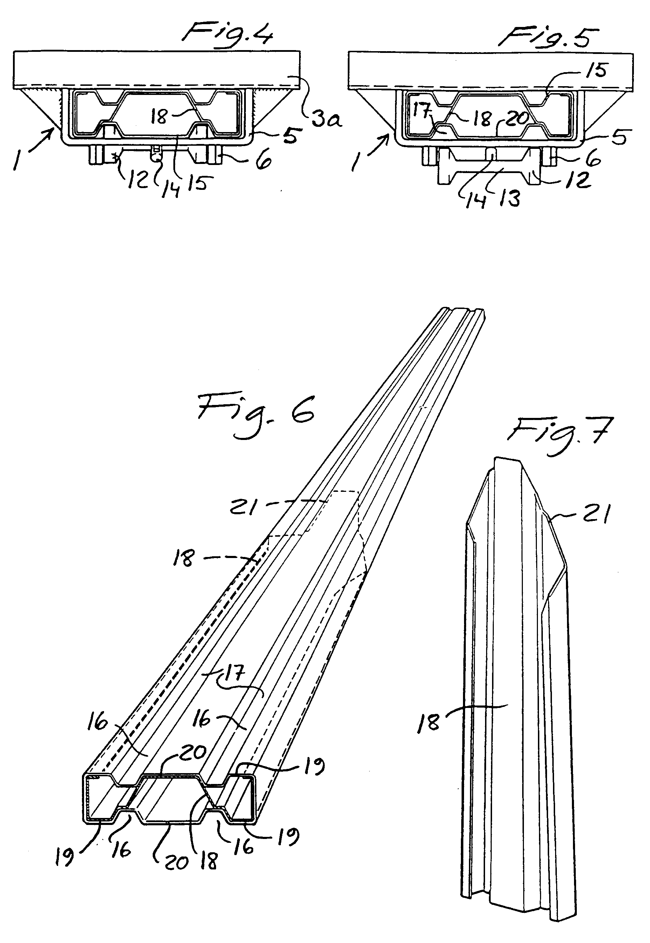

The anchoring device 1 illustrated in Figures 1-5 is mounted on one side of a load-carrying vehicle, such as a railway truck. This one side of the truck is shown in Figure 1 as an elongated, horizontal beam B. The upper part of the anchoring device is located roughly in the same plane as the load-carrying surface of the truck. The device 1 includes a holder 2, which is screwed or welded firmly to the beam B. The holder 2 is comprised of a bottom plate 3 which is provided with a side recess 4 and which has an angled upper part 3a. The holder also includes a U-shaped sleeve 5 which is welded firmly to the bottom plate 3 and which has an upper reinforcement 10 and two attachments 6 which project out from the sleeve. The sleeve 5 is provided with two side recesses 7 and a rectangular front recess 8. The sleeve 5 is also provided with a bottom piece 9.

The attachments 6 are provided with holes which form journalling means for two journal axles 11 of an eccentric device which is comprised of two rollers 12 on which the journal axles 11 are mounted, and a shaft 13 which connects the rollers. Each roller 12 tapers conically towards the other roller and is circular-cylindrical in a direction from said other roller. The shaft 13 is connected centrally with the rollers 12 and is provided with a rod 14 having a spacer element 14a which is able to lie against the sleeve 5. The journal axles 11 and the holes in the attachments 6 are located on mutually the same axis line as that spaced from the common axis line of the shaft 13 and the rollers 12. The rollers 12 can be inserted into the front recess 8 by means of the rod 14.

The post to be anchored by means of the aforedescribed device is referenced 15 and is shown partially in Figures 1, 4 and 5 and is shown fully in Figure 6. The post 15, which may conveniently be made of steel, aluminium or some other metal alloy, is preferably tapered uniformly upwards, among other things, in order to obtain a fine resiliency and to save material. The post 15 has a rectangular or oblong cross-sectional shape with a side ratio of between 1:4 and 1:6, preferably about 1:5, and has two pairs of mutually identical recesses 16 on the two opposing long sides of the rectangle. The recesses 16 of the illustrated embodiment have a trapezoidal cross-sectional shape although said recesses may have only one surface which defines an angle with the short side of the rectangle, preferably the surface which is located nearest the centre of the rectangle. Each recess 16 has a depth which is equal to about 1/4 of the short side of the rectangle and its width is roughly the same size or slightly greater. The distance of the centre of each recess from the short sides of the rectangle is about 1/4 of the long side of said rectangle. The angle of each recess side to the short side of the rectangle is about 30°. According to one preferred embodiment, the rectangle measures about 50 x about 250 mm. The recesses 16 form the ends of four channels or flutes 17 which extend in the direction of the longitudinal axis of the post. The regions between and outside each pair of channels 17 form ridges 19 and 20 respectively. These channels and ridges can be said to form irregularities on the post. The channel 17 and the ridges 19, 20 narrow upwardly to essentially the same extent as the post cross-section. The post has a length of about 2,400 mm. The cross-section of the upper part of the post 15 is closed by swaging and/or filling the same with a weld filling.

The post 15 is manufactured with a relatively thin but constant wall thickness so as to produce a comparatively lighter and cheaper post. A reinforcement may be provided within the post, so as to improve its mechanical strength. One such reinforcement 18 is shown fitted to the post 15 in Figures 4-6, this reinforcement being different to the reinforcement shown in Figure 7. The reinforcement 18 is conveniently made of steel and has essentially the same material thickness as the post. The reinforcement is preferably spot-welded to the post, subsequent to having been inserted thereinto. The reinforcement 18 narrows upwardly and has an outer cross-sectional dimension which is only slightly smaller than the internal cross-section dimension of the post 15. The reinforcement, however, has an open cross-section so as to enable the cross-dimensions of the reinforcement to be made smaller when inserting the reinforcement into the post from its thicker, open end. After having been inserted into the post, the reinforcement is allowed to spring back to its larger or wider state, through the natural resiliency of the walls of the reinforcement. The reinforcement has a wave-shaped cross-section with certain surface parts in abutment with the inner surface of the post, and imparts to the post a mechanical strength which is essentially equal in the two mutually opposite directions of the post cross-section. Since it is the bottom part of the post that is normally subjected to the highest bending stresses, it is sufficient for the reinforcement to extend from the bottom part of the post 15 to a distance of from 1/3-2/3 of the length of the post, from said bottom end, preferably a distance of about 1/2. The reinforcement of the illustrated embodiment has a length of about 1,000 mm.

The upper edge 21 of the reinforcement 18 is higher in the centre of the cross-section than in its outer regions, so that bending stresses on the post will be taken-up-by the upper end of the reinforcement in regions located at varying distances from the ends of the post, and therewith improve mechanical strength.

When fitting the post 15 to the anchoring device 1, the bottom end of the post is inserted down into the holder 2 until said end rests on the bottom piece 9. It is immaterial whether the post is therewith rotated through 180°, since the post is essentially equally as strong in both directions. Since the outer cross-sectional dimensions of the post are not insignificantly smaller than the inner cross-section dimensions of the sleeve 5, so that dirt, rust in the holder and/or on the post will not prevent the post from being brought to its bottom position in the holder 2, the post will be off-centre in the sleeve 5.

When the handle 14 is then moved from its bottom position, shown in broken lines in Figure 2, towards its upper position, shown in Figures 1 and 4, the conical surfaces on the rollers 12 will come into contact with one or both of the angled surfaces on the two post channels 17, thereby displacing the post in the direction of the longitudinal axis of the vehicle and bringing said post to a central position in the sleeve 5. In the final stage of this rotary movement of the handle 14, the rollers 12 will exert a heavy force on the post 15 and therewith also press the post towards the bottom plate 3 immediately after finally centering of the post at right angles thereto. When the shaft 13 has taken an overcentre position in relation to the axle journals 11, i.e. the connecting line between the axle journals 11 are located above the centre line of the shaft 13, the post 15 is firmly locked in the holder 2 and the handle 14 is unable to turn back to its bottom position without the application of a heavy force.

Even though the invention has been described and illustrated with reference to only one exemplifying embodiment thereof, it will be understood that the invention is not restricted to this particular embodiment and that the invention is limited solely by the features set forth in the following Claims.

## Claims

1. A device for anchoring a post (15) to a load-carrying vehicle, said device including a holder (2) which functions to hold the post in an upstanding position with a given clearance between the holder and the post, and further comprises a locking arrangement (11-14) for detachably locking the post in the holder, **characterized** in that the locking arrangement is provided with means (11-14) which include at least one eccentric for engagement with and positional adjustment of the post (15) transversely to its longitudinal axis, said eccentric (12) being rotatable around an axis perpendicular to the longitudinal axis of the post (15), said axis extending in a first direction, said eccentric (12) acting on the post (15) by a contact force having a first force component in said first direction and a second force component in a second direction perpendicular to said first direction and to the longitudinal axis of the post (15), said first force component adjusting the position of the post (15) in said first direction to a position determined by the geometry of the post (15) and the eccentric (12), said second force component pressing and displacing the post (15) into the locked position.

2. A device according to Claim 1, **characterized** in that the aforesaid means (12) are configured to act on at least one surface of the post (15), which surface is inclined in relation to said first direction and in relation to said second direction.

3. A device according to Claim 1 or 2, **characterized** in that said means include at least one conical roller (12).

4. A device according to Claim 3, **characterized** in that the at least one roller (12) and the eccentric (11-14) are one and the same means.

5. A device according to Claim 3 or 4, **characterized** by two mutually spaced rollers/eccentrics (11-14) which act on at least one irregularity (17, 19, 20) on the post such as to centre said post in the holder (2).

6. A device according to Claim 5, **characterized** in that the rollers/eccentrics (11-14) are connected by means of a shaft (13) which is provided with a pivotal handle (14) for rotation of the shaft eccentrically in relation to axle journals (11) which project out from the rollers/eccentrics and which are rotatably mounted in the holder (2).

7. A post for load-carrying vehicles, said post being intended to be held in an upstanding position and detachably locked in a vehicle-mounted holder (2) by means of a locking arrangement (11-14), **characterized** in that the post (15), at least in the region thereof that is intended to engage said locking arrangement (11-14), is provided on its exterior with at least two channels (17) separated by at least one ridge (20), which channels (17) and ridge (20) extend in the direction of the longitudinal axis of said post (15) along an essential part of its length and with which said locking arrangement (11-14) engages.

8. A post according to Claim 7, **characterized** in that the channels (17) and/or the ridges (19, 20) extend along the whole of the post (15) which preferably narrows upwardly.

9. A post according to Claim 7 or 8, **characterized** in that the post (15) has a pair of mutually parallel and mutually spaced channels or flutes (17) on each of two opposite sides of the post, and further has a ridge (20) which extends between the two channels of a channel pair.

10. A post according to any one of Claims 7-9, **characterized** in that the channels (17) and/or the ridges (19, 20) have a trapezoidal cross-section.

11. A post according to any one of Claims 7-10, **characterized** by a reinforcement fitted within the post.

12. A post according to Claim 11, **characterized** in that the reinforcement (18) extends between the bottom part of the post (15) and a point which is spaced from the top part of said post, said point preferably being located at a distance from the bottom part of said post which is equal to 1/3-2/3 of the length of said post.

13. A post according to Claim 11 or 12, **characterized** in that the reinforcement (18) has an open cross-section, preferably a wave-shaped cross-section, with surface parts lying against the grooves (17) and ridges (19, 20) on said post.

14. A post according to any one of Claims 11-13, **characterized** in that the upper edge (21) of the reinforcement (18) is higher in the centre of the cross-section than in the outer regions thereof.

## Patentansprüche

1. Einrichtung zum Befestigen einer Steckrunge (15) auf einem Nutzfahrzeug, welche Einrichtung einen Halter (2), der die Runge in aufrechter Position mit vorgegebenem Spiel zwischen dem Halter und der Runge festhält, sowie einen Sperrmechanismus (11 - 14) zur lösbaren Verriegelung der Runge im Halter umfaßt, dadurch gekennzeichnet, daß der Sperrmechanismus mit Organen (11 - 14) versehen ist, welche wenigstens einen Excenter zum Eingriff mit und zur Positionseinstellung der Runge (15) quer zu ihrer Längsachse umfassen, welcher Excenter (12) um eine senkrecht zur Längsachse der Runge (15) verlaufende Achse drehbar ist, die sich in eine erste Richtung erstreckt, wobei der Excenter (12) auf die Runge (15) mit einer Berührungskraft einwirkt, die eine erste Kraftkomponente in der genannten ersten Richtung und eine zweite Kraftkomponente in einer zweiten Richtung aufweist, die senkrecht zur ersten Richtung und zur Längsachse der Runge (15) verläuft, wobei die erste Kraftkomponente die Position der Runge (15) in der ersten Richtung in eine durch die Geometrie der Runge (15) und des Excenters (12) bestimmte Stellung einrichtet und die zweite Kraftkomponente die Runge (15) in die verriegelte Stellung drückt und verschiebt.

2. Einrichtung nach Patentanspruch 1, dadurch gekennzeichnet, daß die Organe (12) ausgebildet sind, um wenigstens eine Oberfläche der Runge (15) einzuwirken, die in bezug auf die erste Richtung und in bezug auf die zweite Richtung schräg verläuft.

3. Einrichtung nach Patentanspruch 1 oder 2, dadurch gekennzeichnet, daß die Organe wenigstens eine konische Rolle (12) umfassen.

4. Einrichtung nach Patentanspruch 3, dadurch gekennzeichnet, daß die wenigstens eine Rolle (12) und der Excenter (11 - 14) ein und dasselbe Organ sind.

5. Einrichtung nach Patentanspruch 3 oder 4, gekennzeichnet durch zwei voneinander im Abstand befindliche Rollen / Excenter (11 - 14), die mit wenigstens einer unebenen Fläche (17, 19, 20) auf der Runge zusammenwirken, um die Runge im Halter (2) zu zentrieren.

6. Einrichtung nach Patentauspruch 5, dadurch gekennzeichnet, daß die Rollen / Excenter (11 - 14) durch eine Welle (13) verbunden sind, die mit einem Schwenkgriff (14) zur exzentrischen Drehung der Welle in bezug auf Schwenkzapfen (11) versehen ist, die von den Rollen / Excentern vorstehen und die im Halter (2) drehbar gelagert sind.

7. Steckrunge für Nutzfahrzeuge, welche Runge zur Befestigung in aufrechter Position und mit lösbarer Verriegelung in einem am Fahrzeug angebrachten Halter (2) mittels eines Sperrmechanismus (11 - 14) vorgesehen ist, dadurch gekennzeichnet, daß die Runge (15) wenigstens in ihrem zum Eingriff mit dem Sperrmechanismus (11 14) vorgesehenen Bereich an ihrer Außenseite mit wenigstens zwei Kanälen (17) versehen ist, die durch wenigstens einen Kamm (20) getrennt sind, wobei sich die Kanäle (17) und Kämme (20) in Richtung der Längsachse der Runge (15) entlang eines wesentlichen Teiles von deren Länge erstrecken und mit diesen der Sperrmechanismus (11 - 14) in Eingriff kommt.

8. Runge nach Patentanspruch 7, dadurch gekennzeichnet, daß sich die Kanäle (17) und / oder die Kämme (19, 20) entlang der ganzen Runge (15) erstrecken, die sich vorzugsweise nach oben hin verengt.

9. Runge nach Patentanspruch 7 oder 8, dadurch gekennzeichnet, daß die Runge (15) an jeder von zwei entgegengesetzten Seiten ein Paar von zueinander parallelen und voneinander im Abstand befindlichen Kanälen oder Rinnen (17) aufweist und weiters mit einem Kamm (20) versehen ist, der sich zwischen den beiden Kanälen eines Kanalpaares erstreckt.

10. Runge nach einem der Patentansprüche 7 bis 9, dadurch gekennzeichnet, daß die Kanäle (17) und / oder die Kämme (19, 20) trapezförmigen Querschnitt aufweisen.

11. Runge nach einem der Patentansprüche 7 bis 10, gekennzeichnet durch eine innerhalb der Runge angebrachte Verstärkung.

12. Runge nach Patentanspruch 11, dadurch gekennzeichnet, daß sich die Verstärkung (18) zwischen dem unteren Teil der Runge (15) und einem Punkt erstreckt, der sich vom oberen Teil der Runge im Abstand befindet und vorzugsweise in einem Abstand vom Bodenteil der Runge liegt, der 1/3 - 2/3 der Länge der Runge beträgt.

13. Runge nach Patentanspruch 11 oder 12, dadurch gekennzeichnet, daß die Verstärkung (18) einen offenen Querschnitt, vorzugsweise einen wellenförmigen Querschnitt aufweist, wobei die Obenflächenabschnitte gegen die Kanäle (17) und Kämme (19, 20) der Runge anliegen.

14. Runge nach einem der Patentansprüche 11 bis 13, dadurch gekennzeichnet, daß die obere Kante (21) der Verstärkung (18) im Zentrum des Querschnittes höher ist als in ihren äußeren Bereichen.

## Revendications

1. Dispositif d'ancrage d'un poteau (15) sur un véhicule porteur de charges, ledit dispositif comprenant une fixation (2) qui fonctionne de manière à maintenir le poteau en position dressée droite avec un certain jeu entre la fixation et le poteau, et comprenant de plus un mécanisme de blocage (11-14) servant à bloquer le poteau de manière amovible dans la fixation, caractérisé en ce que le mécanisme de blocage est muni de moyens (11-14) comprenant au moins un excentrique destiné à venir en prise avec le poteau (15) et à régler la position de ce dernier transversalement par rapport à son axe longitudinal, ledit excentrique (12) pouvant tourner autour d'un axe perpendiculaire à l'axe longitudinal du poteau (15), ledit axe s'étendant dans une première direction, ledit excentrique (12) agissant sur le poteau (15) par une force de contact ayant une première composante dans ladite première direction et une deuxième composante dans une deuxième direction perpendiculaire à ladite première direction et à l'axe longitudinal du poteau (15), ladite première composante réglant la position du poteau (15) dans ladite première direction dans une position déterminée par la géométrie du poteau (15) et l'excentrique (12), ladite deuxième composante forçant et déplaçant le poteau (15) en position bloquée.

2. Dispositif selon la revendication 1, caractérisé en ce que les moyens (12) précités sont configurés pour agir sur au moins une surface du poteau (15), laquelle surface est inclinée par rapport a ladite première direction et par rapport à ladite deuxième direction.

3. Dispositif selon la revendication 1 ou la revendication 2, caractérisé en ce que lesdits moyens comprennent au moins un galet conique (12).

4. Dispositif selon la revendication 3, caractérisé en ce que ledit galet (12) au moins au nombre de un et l'excentrique (11-14) sont un seul et même moyen.

5. Dispositif selon la revendication 3 ou la revendication 4 , caractérisé en ce que deux galets/excentriques (11-14) espacés l'un de l'autre agissent sur au moins une irrégularité (17, 19, 20) du poteau afin de centrer ledit poteau dans la fixation (2).

6. Dispositif selon la revendication 5, caractérisé en ce que les galets/excentriques (11-14) sont reliés par l'intermédiaire d'un arbre (13) muni d'une poignée pivotante (14) destinée à faire tourner l'arbre de manière excentrique par rapport aux tourillons (11) de l'arbre qui dépassent des galets/excentriques et qui sont montés en rotation dans la fixation (2).

7. Poteau pour véhicules porteurs de charges, ledit poteau étant destiné à être maintenu en position dressée droite et à être bloqué de manière amovible par l'intermédiaire d'un mécanisme de blocage (11-14) dans une fixation (2) montée sur le véhicule, caractérisé en ce que l'extérieur du poteau (15), au moins dans la zone de celui-ci destinée à venir en prise avec ledit mécanisme de blocage, comporte au moins deux rainures (17) séparées par au moins une nervure (20), lesquelles rainures (17) et nervure (20) s'étendent dans le sens de l'axe longitudinal dudit poteau (15) sur une partie essentielle de sa longueur, et avec lesquelles ledit mécanisme de blocage (11-14) vient en prise.

8. Poteau selon la revendication 7, caractérisé en ce que les rainures (17) et/ou les nervures (19, 20) s'étendent sur la totalité du poteau (15), qui de préférence se rétrécit vers le haut.

9. Poteau selon la revendication 7 ou la revendication 8, caractérisé en ce que le poteau (15) possède une paire de rainures ou cannelures (17) parallèles entre elles et espacées l'une de l'autre sur chacun des deux côtés opposés du poteau, et possède de plus une nervure (20) qui s'étend entre les deux rainures d'une paire de rainures.

10. Poteau selon l'une quelconque des revendications 7 à 9, caractérisé en ce que les rainures (17) et/ou les nervures (19, 20) sont de section trapézoïdale.

11. Poteau selon l'une quelconque des revendications 7 à 10, caractérisé en ce qu'un renfort est monté à l'intérieur du poteau.

12. Poteau selon la revendication 11, caractérisé en ce que le renfort (18) s'étend entre la partie basse du poteau (15) et un point qui est espacé de la partie haute dudit poteau, ledit point étant de préférence situé à une distance comprise entre 1/3 et 2/3 de la longueur dudit poteau par rapport à la partie basse dudit poteau.

13. Poteau selon la revendication 11 ou la revendication 12, caractérisé en ce que le renfort (18) a une section de profil ouvert, de préférence un profil ondulé, avec des parties de sa surface en contact avec les rainures (17) et les nervures (19, 20) dudit poteau.

14. Poteau selon l'une quelconque des revendications 11 à 13, caractérisé en ce que le bord supérieur (21) du renfort (18) est plus haut au centre du profil que dans les zones extérieures de celui-ci.
